Europäisches Patentamt

European Patent Office

Office européen des brevets

(19)

(11) **EP 1 712 984 A1**

(12) ## EUROPEAN PATENT APPLICATION

(43) Date of publication:
**18.10.2006 Bulletin 2006/42**

(51) Int Cl.:
*G06F 3/06* (2006.01)   *G06F 12/02* (2006.01)

(21) Application number: **05090110.7**

(22) Date of filing: **15.04.2005**

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(71) Applicant: **DEUTSCHE THOMSON-BRANDT GMBH**
**78048 Villingen-Schwenningen (DE)**

(72) Inventor: **Wittenburg, Jens Peter**
**30916 Isernhagen (DE)**

(74) Representative: **Hartnack, Wolfgang**
**Deutsche Thomson-Brandt GmbH**
**European Patent Operations**
**Karl-Wiechert-Allee 74**
**30625 Hannover (DE)**

(54) **Method and system for accessing logical data blocks in a storage system that includes multiple memories which are connected to at least one common bus**

(57)   For recording or replaying in real-time digital HDTV signals very fast memories are required. For storage of streaming HD video data NAND flash memory based systems can be used. However, NAND flash memories have a slow write access, and they have unmasked production defects. Erase operations can be carried out on complete flash-blocks only, and defect flash-blocks must not be used by the file system. The invention uses logical file system blocks which are larger than the physical data blocks: a logical file system block is defined as the combination of one flash-block from each flash memory of the memory system. In addition, to each memory a block indirection table (IRTBL) is assigned in order to mask physical defects in storage cells of said NAND flash memories, and to map logical data block address values (LADD) to non-defect physical block address values (PHADD).

Fig.2

EP 1 712 984 A1

**Description**

The invention relates to a method and to a system for accessing in a memory system data blocks of multiple memories which are connected by at least one common data I/O bus, wherein the memories are physically accessed by memory pages and the memories are logically accessed by flash-blocks which each include multiple ones of said memory pages.

Background

For recording or replaying in real-time digital high bandwidth video signals, e.g. HDTV signals, very fast memories are required. For storage of streaming HD video data NAND flash memory based systems could be used. Flash memory devices are physically accessed in a page oriented mode, whereby one 'page' includes e.g. 1024 data words and related error correction code (ecc). As an alternative, a standard DOS/Windows FAT file system employed on (parallel) SD-flash cards could be used, e.g. Panasonic P2-cards, but it is not known how real-time operation is secured.

In file systems that are currently being used for hard disks (some of which are also used for flash storage devices, i.e. flash memory sticks), logical file system blocks are usually kept rather small in order to reduce the memory space wasted by unused parts of these file system blocks. Furthermore, the file system block is the logical unit marked as 'bad' in case of a defect. So, bad block mapping and file system handling is carried out employing a unified file allocation table.

Invention

NAND flash memories have two basic disadvantages:

- the write access is rather slow;
- they have unmasked production defects and acquire even more defects during their lifetime. The required error handling is under user responsibility.

For the recording of streaming video, the related file system must provide address values denoted "logical block numbers" of unused storage space under real-time conditions. It also must take care of not addressing defect memory blocks. In a high-definition video recording system, due to the slow write access, a high number of interleaved and parallel flash memory devices must be employed. This means that several flash devices are to be accessed in parallel and all devices on the same bus are to be accessed in subsequent order to sustain the required streaming bandwidth.

Erase operations on a specific flash memory can be carried out on certain-size data blocks only, which are not identical with logical file system blocks and which data blocks are therefore denoted by the term "flash-block" in the following. A flash-block consists of e.g. 64 pages. Since a detection of defects in flash memory devices (e.g. NAND devices) takes place for instance during an erase operation, a defect in a page makes an entire flash-block unusable. Such defect flash-blocks must not be used by the file system.

A problem to be solved by the invention is to provide for a memory-based streaming video recording system logical file system blocks that take into account the properties of NAND flash memories. This problem is solved by the method disclosed in claim 1. A storage system that utilises this method is disclosed in claim 2.

The invention deviates from a scheme where logical file system blocks and physical memory blocks have the same size and are kept small. A logical file system block could be defined as the combination of one flash page from each flash memory device, but this would lead to unnecessarily large file system tables due to more entries in the limited and costly resource of table SRAM/DRAM, and it would make difficult if not impossible the demand for the unexceptional subsequent flash device access per bus.

Instead, a specific file system is used that has separated tables for bad block remap and file allocation tables in order to allow 'jumbo blocks' as logical file system blocks, whereby a jumbo block is the combination of one flash-block from all flash memory devices used in the entire storage system. Such jumbo block becomes the smallest addressable system entity when using the file system tables.

However, such file system jumbo blocks would not be acceptable if a single defect page would cause a bad file system block, and typical defect statistics would lead to almost exclusively bad blocks being present. The inventive solution is to keep the bad block mapping on single flash-block level using 'block indirection tables', one block indirection table per flash memory device, but to still use a jumbo block representing multiple flash-blocks as a logical address block. Advantageously, the wasted memory space (i.e. the unused space due to partially filled blocks at the end of a file) caused by the application of jumbo blocks is acceptable in video recording systems since the number of recorded files is rather low (i.e. <255) as compared to that of file systems currently being used for computer hard drives.

The invention makes use of the following considerations:

a) To sustain the data rate in a flash memory based recording system with bus interleaved access to the flash memory devices, the access to flash memories on a bus is to be performed in circular subsequent order, i.e. flash 0, flash 1, flash 2, ..., flash N-2, flash N-1, flash 0, flash 1, ... (any exceptions to this scheme lead to an unacceptable stall). To ensure the application of this access pattern for all file system operations, i.e. for operations involving more than one logical file system block, the access pattern must not be distributed to more than one logical file system block. Hence, the minimum size for a logical file system block would be a flash page of all flash memory devices on a bus. In other words, the file system block boundaries are automatically aligned with the access pattern. The subsequent access is restricted to the internal block operation of the file system.

b) To support the data rate of high definition video streams, using a single bus (even when interleaved) is insufficient and using multiple parallel busses becomes necessary. Since parallel access is necessary at all time instants, the access pattern to individual devices on all busses is kept identical. Hence, the individual busses cannot be accessed independently. As a consequence, the minimum size for the logical file-system block would again be selected to be a combined flash page from all flash devices in the system.

c) However, erase operations take place on flash-blocks only (one flash-block corresponds to 64 flash memory pages). If several logical file system blocks were part of a flash-block, its erasure would affect multiple file system blocks - which is hardly acceptable. There may be ways to restore the data from those file system blocks whose erasure was not desired. However, it is advantageous to align the logical file system blocks not only with flash pages but also with flash-blocks.

Hence, a logical file system block (i.e. a jumbo block) is defined as a combined flash-block of all flash devices in a system. Such an entity is very large in comparison to well-known file systems as employed for hard disks or optical drives.

d) Most state-of-the-art file systems also use the logical blocks to mask physical defects of the storage medium by remapping to spare blocks. When considering the large size of the jumbo blocks and the defect statistics of flash memories, this is not a suitable option. According to the invention, the defect masking is kept on flash-block level of the individual memory device. Therefore separate tables - one table per flash device - are required. These tables map logical flash-block address values to physical flash-block address values of flash-blocks which are not defect. The resulting separation of tables allows to operate the file system on jumbo blocks.

Only the writing into the flash memories is carried out on a page basis, whereby the same page number N in all flash memories forms a logical page N of the storage system.

In principle, the inventive method is suited for accessing logical data blocks in a storage system that includes multiple memories which are connected to at least one common data I/O bus, wherein each one of said memories can be physically accessed by memory pages which each include multiple data words and each one of said memories can be logically accessed by flash-blocks which each include multiple ones of said memory pages, said method including the step of accessing said multiple memories using a file system in which said logical data blocks have a size that is larger than the size of said flash-blocks and in which file system each one of said logical data blocks includes a flash-block of each memory connected to said at least one common data I/O bus.

In principle the inventive storage system provides access to logical data blocks, said storage system including multiple memories which are connected to at least one common data I/O bus, wherein each one of said memories can be physically accessed by memory pages which each include multiple data words and each one of said memories can be logically accessed by flash-blocks which each include multiple ones of said memory pages, said storage system including means for accessing said multiple memories using a file system in which said logical data blocks have a size that is larger than the size of said flash-blocks and in which file system each one of said logical data blocks includes a flash-block of each memory connected to said at least one common data I/O bus.

Advantageous additional embodiments of the invention are disclosed in the respective dependent claims.

Drawings

Exemplary embodiments of the invention are described with reference to the accompanying drawings, which show in:

Fig. 1    block diagram of the inventive memory system;
Fig. 2    table layout and functionality of flash-block remap tables.

Exemplary embodiments

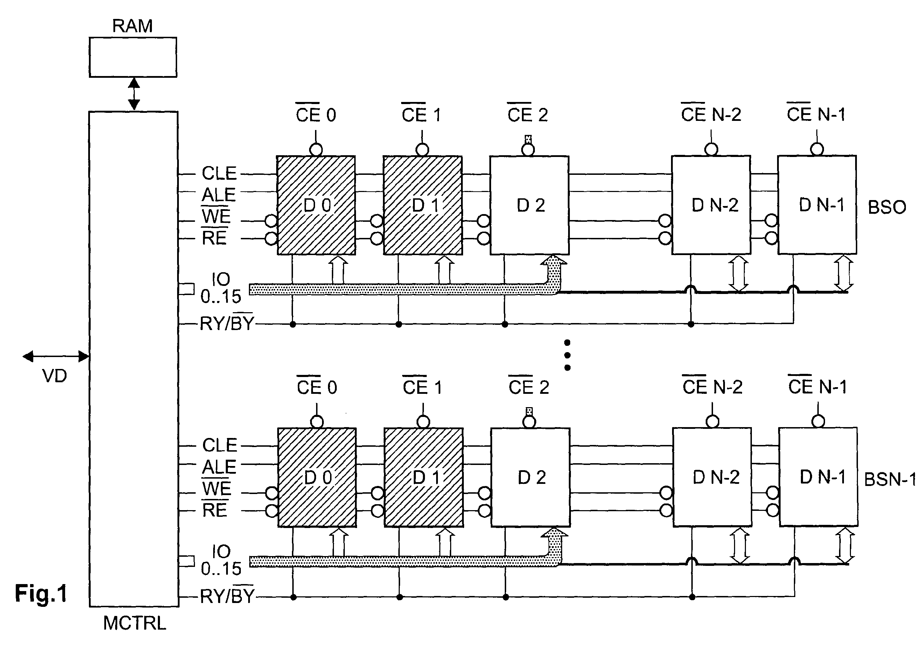

The following NAND flash memories can be used: Samsung K9K2G16U0M-YCB000 (2Gbit, 16bit oriented), K9W9G08UOM-YCB000 (4Gbit, 8bit oriented), Toshiba TH58NVG2S3BFT00 (4Gbit, 8bit oriented) and MICRON MT29G08AAxxx (2Gbit, 8bit oriented), MT29G16AAxxx (2Gbit, 16bit oriented).
The invention uses a specific layout of file system tables and bad block remap tables for the handling of files of real-time streaming HD video data on flash memory based storage systems.
The corresponding bus structure for the connection of the memory devices is shown in Fig. 1. Each bus BS0, BS1, ..., BSN-1 features a number of 28 flash devices D0, D1, D2, ..., DN-2, DN-1, whereby 8 busses are operating in parallel, which equals 224 flash memory devices in total. Each bus BS0, BS1, ..., BSN-1 can write to, or read from, the memory devices 16-bit words 100.. 15. These data inputs/outputs are used to input command, address and data, and to output data during read operations. The I/O pins float to high-z when the chip is deselected or when the outputs are disabled.

$RY/\overline{BY}$ is a ready/busy output indicating the status of the device operation. When low, it indicates that a program, erase or random read operation is in process and returns to high state upon completion. It is an open drain output and does not float to high-z condition when the chip is deselected or when outputs are disabled.

$\overline{RE}$ is a read enable signal whereas $\overline{WE}$ is a write enable signal. The read enable input is a serial data-out control and, when active, drives the data onto the I/O bus. Data is valid after the falling edge of read enable which also increments an internal column address counter by one. The write enable input controls writes to the I/O port. Commands, address and data are latched on the rising edge of the write enable pulse.
The command latch enable input CLE controls the activating path for commands sent to a command register. When active high, commands are latched into the command register through the I/O ports on the rising edge of the write enable signal. The address latch enable input ALE controls the activating path for address to the internal address registers. Addresses are latched on the rising edge of the write enable signal with ALE high.

$\overline{CE0}, \overline{CE1}, \overline{CE2}, ..., \overline{CEN-2}$ and $\overline{CEN-1}$ denote a chip enable input and are used for device selection control. When the device is in the busy state, CE high is ignored and the device does not return to a standby mode in a program or erase operation.

A memory or micro controller unit MCTRL controls all flash memory devices using the above-listed signals. Controller MCTRL receives video data VD for recording, or outputs recorded video data VD for replay. An additional memory means RAM (SRAM and/or DRAM) is connected to controller unit MCTRL and stores the above-mentioned file system tables and defect block remap tables.
When writing, each single flash memory is accessed page by page in each flash block, and flash-block by flash-block. The bank of memories is accessed per page, memory by memory.

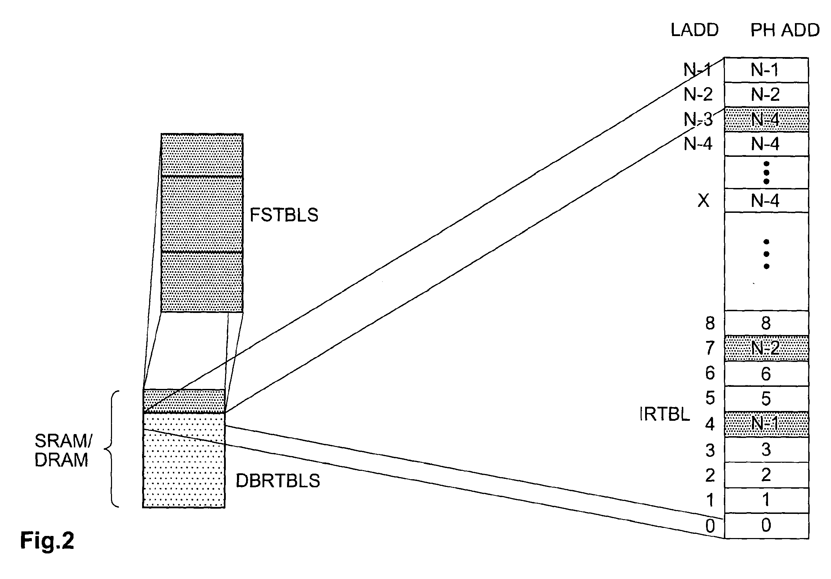

Fig. 2 shows the inventive table layout and the functionality of the flash-block remap tables. Memory RAM stores the file system tables FSTBLS (grey or hatched) including a take list and an FAT file allocation table, defect block remap tables DBRTBLS and an individual remap table IRTBL per flash memory device. The take list refers for each take to related entries in the file allocation table (FAT). The first entry in the take list may refer to empty takes. The FAT entries cover all logical blocks, i.e. all jumbo blocks available in the memory system. When pointing to a jumbo block in the FAT list that includes a defect flash-block, the defect block remap tables DBRTBLS indicate this defect in the corresponding individual remap table IRTBL which points to an other flash-block in the corresponding flash memory that is not defect.
The right side of Fig. 2 shows logical addresses LADD mapped to physical address values PHADD, for which physical address values corresponding defect flash-blocks are marked grey or hatched. The successive access within a specific one of the memories starts with logical address '0' pointing to physical address '0', and continues correspondingly with logical addresses '1', '2' and '3'. Assume the (physical) flash-block '4' under logical address '4' is defect. The individual remap table IRTBL indicates this defect by placing a corresponding entry 'N-1' to logical address '4'. Under physical address 'N-1' a good flash-block is addressed at 'the other end' of the flash memory. The processing continues with logical addresses '5' and '6'. Assume that the physical flash-block under logical address '7' is defect. The individual remap table IRTBL indicates this defect by placing a corresponding entry 'N-2' to logical address '7'. Under physical address 'N-2' a good flash-block is addressed. The next occurring defect flash-block at logical address 'X' would get a physical address 'N-3'. However, if the related flash-block is defect, too, instead of using physical address 'N-3' the physical address 'N-4' is assigned to logical address 'X'.
The tables include some redundancy because e.g. the logical address values N-1 to N-4 are already occupied and can no more be used for fresh incoming video data.

NAND flash memories operate on pages consisting of e.g. 1056 words. The write access to these pages, which is most real-time critical, can take place using a 20MHz bus clock. After an entire page has been entered into a memory device D, a 'program' command is issued which initiates copying of data from a flash memory internal page register to the actual flash memory cells. Such page program or write operation requires $700\mu s$ in the worst case. The page register must not be accessed during this time period. However, data transfer to the page registers of other flash memories on the same bus may take place during this time. When using above Samsung devices, optimum bus utilisation is achieved with a minimum of 12 flash devices per bus.

According to the inventive logical data block layout described above, a logical file system block contains 28 Mbytes, whereas typical state-of-the-art file systems feature block sizes in the Kbytes range. The file system contains only 2048 logical blocks (i.e. jumbo blocks). The maximum number of files that may be stored on the storage system is 255 plus one extra file representing an empty jumbo block list. However, a typical quantity is <20. In a worst case this would mean that partially filled jumbo blocks at the end of each file may lead to unused space amounting to 12.5% of the total storage capacity, but in practise a value of <2% is more realistic.

When reading video data from the storage system the replacement flash-block data are read from the flash memories, instead of the erroneous flash-blocks, controlled by the logical file system.

**Claims**

1. Method for accessing logical data blocks in a storage system that includes multiple memories (D0, D1, D2, ..., DN-1) which are connected to at least one common data I/O bus (I00..15), wherein each one of said memories can be physically accessed by memory pages which each include multiple data words and each one of said memories can be logically accessed by flash-blocks which each include multiple ones of said memory pages, **characterised by** the step:

    - accessing (MCTRL) said multiple memories using a file system in which said logical data blocks have a size that is larger than the size of said flash-blocks and in which file system each one of said logical data blocks includes a flash-block of each memory connected to said at least one common data I/O bus.

2. Storage system providing access to logical data blocks, said storage system including multiple memories (D0, D1, D2, ..., DN-1) which are connected to at least one common data I/O bus (IO0..15), wherein each one of said memories can be physically accessed by memory pages which each include multiple data words and each one of said memories can be logically accessed by flash-blocks which each include multiple ones of said memory pages, said storage system including:

    - means (MCTRL) for accessing said multiple memories using a file system in which said logical data blocks have a size that is larger than the size of said flash-blocks and in which file system each one of said logical data blocks includes a flash-block of each memory connected to said at least one common data I/O bus.

3. Method according to claim 1, or system according to claim 2, wherein said memories are NAND flash memories.

4. Method according to claim 1 or 3, or system according to claim 2 or 3, wherein said storage system stores or replays streaming video data (VD) in real-time.

5. Method according to one of claims 1, 3 or 4, or system according to one of claims 2 to 4, wherein access to said memories (D0, D1, D2, ..., DN-1) is performed in circular subsequent order.

6. Method or system according to one of claims 3 to 5 wherein, in order to mask physical defects in storage cells of said NAND flash memories, to each one of said NAND flash memories a block indirection table (IRTBL) is assigned that maps logical data block address values to physical address values related to non-defect flash-blocks.

7. Method or system according to claim 6, wherein said storage system includes micro or memory control means (MCTRL) which control said at least one common data I/O bus (100..15) and to which control means (MCTRL) SRAM or DRAM memory means (RAM) are connected which store said block indirection tables (IRTBL).

**Fig.1**

MCTRL

RAM

VD

CLE
ALE
$\overline{WE}$
$\overline{RE}$

IO
0..15

RY/$\overline{BY}$

$\overline{CE}\ 0$  $\overline{CE}\ 1$  $\overline{CE}\ 2$  $\overline{CE}\ N\text{-}2$  $\overline{CE}\ N\text{-}1$

D 0  D 1  D 2  D N-2  D N-1  BS0

$\overline{CE}\ 0$  $\overline{CE}\ 1$  $\overline{CE}\ 2$  $\overline{CE}\ N\text{-}2$  $\overline{CE}\ N\text{-}1$

CLE
ALE
$\overline{WE}$
$\overline{RE}$

IO
0..15

RY/$\overline{BY}$

D 0  D 1  D 2  D N-2  D N-1  BSN-1

EP 1 712 984 A1

Fig.2

**European Patent Office**

## EUROPEAN SEARCH REPORT

Application Number

EP 05 09 0110

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 02/058074 A (SANDISK CORPORATION) 25 July 2002 (2002-07-25) <br> * page 1, line 10 - page 2, line 5 * <br> * page 3, line 32 - page 4, line 19 * <br> * page 7, line 15 - line 29 * <br> * page 10, line 20 - line 22 * <br> * page 17, line 5 - line 25 * <br> * figure 2 * <br> * figure 15 * <br> ----- | 1-3 | INV. <br> G06F3/06 <br> G06F12/02 |
| X | EP 0 874 368 A (SONY CORPORATION) 28 October 1998 (1998-10-28) <br> * column 1, line 51 - line 53 * <br> * column 4, line 5 - line 29 * <br> * column 4, line 44 - line 45 * <br> * column 5, line 17 - line 56 * <br> * column 9, line 37 - line 50 * <br> * column 10, line 1 - line 3 * <br> * column 10, line 49 - line 53 * <br> * column 11, line 4 - line 6 * <br> * column 12, line 56 - line 57 * <br> * column 15, line 15 - line 27 * <br> * figures 5-9 * <br> ----- | 1-7 | |
| A | US 6 757 800 B1 (ESTAKHRI PETRO ET AL) 29 June 2004 (2004-06-29) <br> * column 3, line 23 - line 37 * <br> * column 3, line 46 - line 56 * <br> ----- | 6,7 | TECHNICAL FIELDS SEARCHED (IPC) <br><br> G06F |

The present search report has been drawn up for all claims

| Place of search | Date of completion of the search | Examiner |
|---|---|---|
| The Hague | 27 June 2006 | Andlauer, J.C. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
............................................................
& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 05 09 0110

This annex lists the patent family members relating to the patent documents cited in the above-mentioned European search report.
The members are as contained in the European Patent Office EDP file on
The European Patent Office is in no way liable for these particulars which are merely given for the purpose of information.

27-06-2006

| Patent document cited in search report | | Publication date | Patent family member(s) | | Publication date |
|---|---|---|---|---|---|
| WO 02058074 | A | 25-07-2002 | CN | 1514971 A | 21-07-2004 |
| | | | EP | 1352394 A2 | 15-10-2003 |
| | | | JP | 2004533029 T | 28-10-2004 |
| | | | TW | 221217 B | 21-09-2004 |
| | | | US | 2002099904 A1 | 25-07-2002 |
| | | | US | 2004210708 A1 | 21-10-2004 |
| EP 0874368 | A | 28-10-1998 | US | 2002059305 A1 | 16-05-2002 |
| US 6757800 | B1 | 29-06-2004 | NONE | | |

EPO FORM P0459

For more details about this annex : see Official Journal of the European Patent Office, No. 12/82